(19) Europäisches Patentamt European Patent Office Office européen des brevets

(11) **EP 3 733 508 B1**

(12) **FASCICULE DE BREVET EUROPEEN**

(45) Date de publication et mention
de la délivrance du brevet:
**03.11.2021 Bulletin 2021/44**

(51) Int Cl.:
***B64D 31/06*** *(2006.01)*          ***B64C 27/57*** *(2006.01)*
***B64C 11/00*** *(2006.01)*          ***G05D 1/08*** *(2006.01)*

(21) Numéro de dépôt: **20169915.4**

(22) Date de dépôt: **16.04.2020**

(54) **PROCÉDÉ DE REGULATION D'UNE INSTALLATION MOTRICE D'UN GIRAVION ET GIRAVION ASSOCIE**

REGULIERUNGSVERFAHREN FÜR ANTRIEBSANLAGE EINES DREHFLÜGELFLUGZEUGS, UND ENTSPRECHENDES DREHFLÜGELFLUGZEUG

METHOD FOR REGULATING A POWERPLANT OF A ROTORCRAFT AND ASSOCIATED ROTORCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2019 FR 1904559**

(43) Date de publication de la demande:
**04.11.2020 Bulletin 2020/45**

(73) Titulaire: **Airbus Helicopters**
**13725 Marignane Cedex (FR)**

(72) Inventeurs:
• **MADEIRA, Alexandre**
**13100 AIX EN PROVENCE (FR)**
• **HONNORAT, Olivier**
**13290 AIX EN PROVENCE (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**EP-A1- 3 444 187          WO-A2-2010/143051**
**US-A1- 2014 229 037      US-A1- 2017 088 281**
**US-B1- 6 198 991**

EP 3 733 508 B1

**Description**

La présente invention concerne un procédé de régulation d'une installation motrice d'un giravion et un giravion appliquant ce procédé. Ce procédé de régulation permet ainsi de faire varier la vitesse de rotation NR d'un rotor principal équipant ce giravion et permettant de participer au moins à la sustentation, voire également à la propulsion, du giravion dans les airs.

Ainsi, un tel procédé de régulation peut notamment être appliqué de manière à réduire l'empreinte acoustique d'un giravion sur son environnement extérieur.

En effet, la vitesse de rotation NR d'un rotor principal d'un giravion est imposée par des conditions générales de dimensionnement ayant un impact direct sur l'encombrement de ce ou ces rotors, sa masse, les performances du giravion, le niveau de sécurité, les nuisances sonores induites mais aussi les coûts directs ou indirects d'exploitation d'un tel giravion.

Par ailleurs, une valeur NRnom dite « nominale » (ou 100%) de la vitesse de rotation NR est généralement définie pour chaque rotor, par une vitesse tangentielle comprise entre 210 et 225 $m.s^{-1}$ étant obtenue à l'extrémité des pales du rotor principal dans ces conditions.

En outre, et tel que notamment décrit dans le document WO 2008/048245, il est également connu de faire varier la vitesse de rotation NR autour de la valeur nominale NRnom. Dans ce cas, une loi de variation est alors appliquée à la vitesse de rotation NR. De cette manière, la vitesse de rotation NR peut s'écarter de façon modérée de la valeur nominale NRnom en fonction des conditions de vol et/ou des besoins de puissance du giravion pour effectuer une manœuvre. En outre, une telle variation de la vitesse de rotation NR a pour effet de modifier les performances du giravion ainsi que le niveau de son empreinte acoustique.

Par exemple, une loi de variation peut permettre de réaliser une régulation limitée de la vitesse de rotation NR en fonction d'une consigne NR0 généralement comprise entre une valeur basse d'environ 98% de la valeur nominale NRnom et une valeur haute d'environ 103% de la valeur nominale NRnom.

En outre, lorsque la consigne NR0 est proche de la valeur haute, les performances de vol du giravion sont optimisées notamment pour pouvoir effectuer certaines phases de vol critiques telles qu'un atterrissage ou un décollage en fournissant au rotor notamment une marge importante de portance.

En revanche, lorsque la consigne NR0 est proche de la valeur basse, le niveau de l'empreinte acoustique du giravion sur le milieu extérieur peut être minimisé. Une telle limitation peut en effet être avantageuse par exemple lors de certaines phases de vol moins critiques à proximité du sol et ne nécessitant pas ou peu de marge de portance.

Cependant avec les procédés de régulation connus, il n'est pas possible d'utiliser une valeur basse de la consigne NR0 qui soit trop faible. En effet, en cas de panne moteur, si la vitesse de rotation NR du rotor est trop faible alors la marge de portance du rotor peut s'avérer insuffisante pour permettre à un pilote d'effectuer une manœuvre d'urgence.

En outre, lorsqu'un pilote souhaite effectuer une manœuvre d'autorotation, il peut être dangereux de partir d'une vitesse de rotation NR trop faible. En effet, une telle manœuvre provoquerait une chute importante du giravion avant que la vitesse de rotation NR du rotor devienne suffisamment grande pour pouvoir freiner cette chute.

Par ailleurs, le document US 2017/088281 divulgue quant à lui une méthode de régulation du fonctionnement d'un ou des moteurs d'un groupe de motorisation équipant un giravion. Un tel groupe de motorisation comprend par exemple au moins un moteur principal à combustion, tel un turbomoteur notamment, fournissant classiquement au giravion la puissance mécanique nécessaire pour procurer au moins l'entraînement d'un ou de plusieurs rotors équipant le giravion.

En outre, une telle méthode de régulation automatique de la vitesse NR d'un rotor de giravion est mise en œuvre uniquement lors des évolutions au sol du giravion afin notamment de limiter les nuisances sonores produites par celui-ci avant son décollage ou après son atterrissage. Une telle régulation automatique de la vitesse NR au sol permet ainsi notamment d'améliorer les conditions de travail pour les opérateurs évoluant à proximité immédiate du giravion lors de ses manœuvres au sol et d'améliorer le confort sonore des passagers et de l'équipage durant les phases d'embarquement et de débarquement.

Selon ce document aucune régulation automatique de la vitesse NR n'est suggérée afin de réduire l'empreinte acoustique d'un giravion en vol, c'est-à-dire à partir d'une hauteur minimale par rapport au sol.

Il n'est donc pas envisagé d'effectuer une régulation du régime de rotation du ou des moteurs principaux en réduisant, lors du vol dans les airs du giravion, progressivement une consigne courante de la vitesse NR.

Au contraire, lorsqu'une vitesse absolue de déplacement au sol est mesurée en étant supérieure à une valeur prédéterminée V1, cette méthode de régulation régule alors à la hausse une consigne courante de la vitesse NR en passant de la deuxième vitesse NR2 à la première vitesse NR1.

Le document US2014/229037 se rapporte quant à lui à un procédé d'entraînement en rotation d'au moins un rotor principal, mettant en œuvre une méthode de détermination d'une valeur variable d'une consigne de régulation du fonctionnement d'un groupe de motorisation d'entraînement en rotation du rotor principal. Cette consigne de régulation est notamment fonction d'une vitesse de rotation souhaitée d'entraînement en rotation du rotor principal.

En outre, ce document décrit une variation progressive et continue de la valeur de la consigne initiale calculée selon une variation progressive et continue de la valeur d'un paramètre physico-chimique, tel que la densité, de l'air extérieur ambiant du giravion.

Cependant, cette méthode de régulation automatique de la vitesse NR ne permet pas de réduire l'empreinte acoustique d'un giravion en fonction de la hauteur de vol du giravion ou de la vitesse de déplacement du giravion.

D'autres méthodes de régulation de la vitesse de rotation NR d'un rotor de giravion ont également été décrites dans les documents US 6 198 991, WO 2010 / 143051 et EP 3 444 187. Ces méthodes reflètent cependant un arrière plan technologique de l'invention.

La présente invention a alors pour objet de proposer un procédé de régulation et un giravion permettant de s'affranchir des limitations mentionnées ci-dessus.

En outre, un objectif du procédé de régulation conforme à l'invention est de réduire l'empreinte acoustique d'un giravion en vol sur l'environnement extérieur sans dégrader le niveau de sécurité, éventuellement sans donner l'impression à un pilote du giravion d'être confronté à une panne moteur.

L'invention se rapporte donc à un procédé selon la revendication 1.

En outre, chaque moteur principal peut avantageusement être un moteur thermique tel que notamment un moteur à explosion ou un turbomoteur. Le moteur secondaire peut quant à lui être avantageusement un moteur électrique pouvant également fonctionner au moins temporairement comme un générateur de courant électrique pour recharger des batteries lorsqu'il n'est pas utilisé pour entraîner en rotation le rotor principal du giravion. Autrement dit, lorsque le giravion évolue en même temps à ou au dessus de la hauteur de seuil prédéterminée (H1) et à ou au dessus de la vitesse de seuil prédéterminée (V1), une boucle de régulation est activée. Tant que la vitesse du giravion est constante ou quasi constante, la consigne courante (NRi) baisse pour atteindre la seconde consigne (NR2, NR2').En revanche, si la vitesse du giravion varie à la baisse ou à la hausse, alors on peut stopper la baisse de la consigne courante (NRi). Lorsque la vitesse du giravion redevient constante ou quasi constante, la consigne courante (NRi) peut recommencer à baisser pour atteindre la seconde consigne (NR2, NR2').

Chaque moteur principal peut alors être piloté pour faire tendre la vitesse de rotation du moteur selon la consigne courante (NRi). Par exemple, un turbomoteur peut être régulé par le biais de deux boucles de régulation, à savoir une première boucle de régulation en fonction d'une vitesse de rotation d'une turbine libre (NTL) imbriquée dans une deuxième boucle de régulation en fonction de la vitesse de rotation (NR) du rotor principal.

Par exemple, pour limiter les risques liés à cette diminution de la consigne courante (NRi), la hauteur de seuil prédéterminée (H1) peut être choisie égale à 1500 pieds (environ 457 mètres). De même, la vitesse de seuil prédéterminée (V1) peut quant à elle être choisie égale à 80 nœuds (environ 41 m.s$^{-1}$). Cependant de telles valeurs de seuils peuvent être adaptées en fonction d'un niveau de sécurité ou des performances requises d'une mission ou encore en fonction des capacités du vol de giravion.

Classiquement, la norme d'un vecteur accélération d'un giravion peut être calculée à partir d'informations relatives à la position ou la vitesse du giravion par rapport au sol. Une telle norme du vecteur accélération peut également être calculée à partir des composantes vectorielles du vecteur accélération directement mesurées au moyen d'un ou plusieurs accéléromètres agencés sur le giravion. Au surplus, la seconde étape de régulation peut être préférentiellement mise en œuvre tant que la norme du vecteur accélération du giravion est inférieure à 0.5 m.s$^{-2}$, voire encore préférentiellement, tant que la norme du vecteur accélération du giravion est inférieure à 0.33 m.s$^{-2}$.

En outre, la baisse de la vitesse de rotation du rotor principal s'accompagne d'une baisse de la portance du rotor principal. Pour la compenser, on peut piloter également en parallèle une augmentation collective du pas des pales du rotor principal. Une telle augmentation se fait donc simultanément sur l'ensemble des pales du rotor principal.

De plus, l'ordre de mise en œuvre de la première étape d'identification et de la deuxième étape d'identification n'est pas important pour un tel procédé de régulation. Ainsi, la deuxième étape d'identification peut être mise en œuvre préalablement à la première étape d'identification. De même, la première étape d'identification et la deuxième étape d'identification peuvent également être mises en œuvre avant l'étape de détermination de la première consigne (NR1) et/ou de la première étape de régulation.

Par ailleurs, une telle seconde étape de régulation peut être automatiquement désactivée lorsque l'une au moins des première étape d'identification et deuxième étape d'identification n'est plus vérifiée.

Avantageusement, l'incrément i peut être compris entre -0,2% et - 0,6% de la consigne courante (NRi) par seconde.

Une telle baisse progressive de la consigne courante (NRi) de la vitesse de rotation (NR) est alors optimale pour d'une part ne pas être interprétée par un pilote comme étant une panne du ou des moteurs et d'autre part pour passer rapidement des fréquences de résonnance du giravion. En effet, de telles fréquences de résonnance sont à proscrire et peuvent dégrader fortement les marges de sécurité liés à des modes propres des pales du rotor principal tels que par exemple des modes de trainée, de battement et de torsion.

En pratique, le procédé de régulation peut comporter une étape de calcul d'une valeur courante (Czmi) d'un coefficient de portance verticale moyen (Czm) du rotor principal et une étape de comparaison de la valeur courante (Czmi) du coefficient de portance verticale moyen (Czm) par rapport à une valeur de seuil (Czm1), la seconde consigne (NR2, NR2') dépendant d'un résultat de l'étape de comparaison.

En d'autres termes, la valeur de la seconde consigne (NR2, NR2') peut déprendre de la valeur courante (Czmi) du coefficient de portance verticale moyen (Czm). En outre, la valeur de seuil (Czm1) peut être préenregistrée dans une première mémoire et/ou être variable et définie par calculs en fonction de la géométrie des pales du rotor principal et des conditions de vol telles que par exemple la pression atmosphérique ou la température de l'air environnant.

Par suite, lors de la seconde étape de régulation tant que la valeur courante (Czmi) reste inférieure à la valeur de seuil (Czm1), la seconde consigne (NR2) peut être comprise entre 60% et 85% de la valeur nominale (NRnom). A titre de comparaison, la première consigne (NR1) peut quant à elle être par exemple comprise entre 90% et 110% de la valeur nominale (NRnom).

Dans ce cas, la seconde consigne (NR2) peut alors être fixe et définie par calculs, des tests ou des simulations et être préenregistrée dans une seconde mémoire. Par exemple, une telle seconde consigne (NR2) peut être définie de manière à obtenir une vitesse tangentielle d'environ 190 m.s$^{-1}$ aux extrémités des pales du rotor principal.

En outre, la seconde consigne (NR2) peut être par exemple choisie égale à 70% de la valeur nominale (NRnom).

Par contre, lors de la seconde étape de régulation si la valeur courante (Czmi) atteint la valeur de seuil (Czm1), la seconde consigne (NR2') peut correspondre à la consigne courante (NRi) de la vitesse de rotation (NR), à savoir la valeur de la vitesse de rotation (NR) quand la valeur de seuil (Czm1) est atteinte. Une telle caractéristique évite alors d'atteindre une vitesse de rotation (NR) du rotor principal induisant un décrochage.

Ainsi, la valeur de la seconde consigne (NR2') peut être définie pour que la valeur courante (Czmi) ne dépasse pas la valeur de seuil (Czm1). En outre, une telle seconde consigne (NR2') peut être comprise entre 70% et 100% de la valeur nominale (NRnom). Par conséquent quelle que soit la situation, la seconde consigne (NR2') est bien inférieure à la première consigne (NR1) ce qui permet de limiter l'empreinte acoustique du giravion sans générer un risque de décrochage et donc dégrader le niveau de sécurité de la mission du giravion.

Avantageusement, la valeur de seuil (Czm1) peut être comprise entre 0,4 et 0,8, voire préférentiellement comprise entre 0,5 et 0,7.

Par ailleurs, selon un exemple particulier de l'invention, la valeur de seuil (Czm1) peut être choisie égale à 0,58 ce qui correspond à une vitesse tangentielle du rotor principal en bout de pales de 190 m.s$^{-1}$. Une telle limite de la valeur de seuil (Czm1) permet ainsi d'éviter le décrochage du giravion.

De plus, si la vitesse du giravion augmente suite à la mise en œuvre de la seconde étape de régulation, cette seconde étape de régulation peut alors augmenter la consigne courante (NRi) pour suivre la valeur de seuil (Czm1) grâce à un polynôme de type :

$$NR = C_0 + A \times Vh + B \times Vh^2 + C \times Zd + D \times Zd^2,$$

et dans lequel :

C$_0$, A, B, C, D sont des fonctions dépendantes de la géométrie rotor principal et de la masse du giravion,

Vh représente la vitesse d'avancement du giravion par rapport à l'air, et

Zd représente une altitude densité du giravion.

Selon un premier mode de réalisation de l'invention, la seconde étape de régulation peut être mise œuvre manuellement par un pilote du giravion.

Par exemple, un bouton peut être actionné par un pilote du giravion de manière à commencer la seconde étape de régulation du procédé.

Selon un second mode de réalisation de l'invention, la seconde étape de régulation peut être mise en œuvre automatiquement.

Dans ce second mode de réalisation, la seconde étape de régulation peut être mise en œuvre sans action spécifique du pilote dès que le giravion a atteint l'altitude de seuil prédéterminée et la vitesse de seuil prédéterminée

En pratique, le procédé de régulation peut comporter une étape de limitation à une valeur réduite (Vh1) d'une vitesse maximale admissible (Vh) correspondant à la vitesse d'avancement du giravion lorsque chaque moteur principal est piloté à son niveau de puissance maximale en continu.

En effet, l'augmentation du couple transmis au rotor principal par l'installation motrice peut être compensée par une limitation de la vitesse d'avancement du giravion. En pratique, une telle valeur réduite (Vh1) peut correspondre par exemple à 90% de la vitesse (Vh) d'avancement maximale admissible du giravion à la puissance maximale en continu.

Selon un exemple de réalisation de l'invention, le procédé de régulation peut comporter une troisième étape de régulation faisant suite à la seconde étape de régulation pour réguler le fonctionnement du ou des moteurs secondaires selon la première consigne (NR1) de la vitesse de rotation (NR).

Eventuellement, le ou les moteurs secondaires peuvent être des moteurs électriques connectés mécaniquement à la boîte de transmission principale de puissance. Préalablement à cette troisième étape régulation, le ou les moteurs secondaires peuvent fonctionner en mode alternateur ou récepteur pour générer de l'énergie électrique et recharger si nécessaire une batterie de stockage d'énergie électrique.

Une telle troisième étape régulation est alors mise en œuvre si un besoin instantané et important de puissance se produit ou est identifié.

Un tel second groupe moteur permet alors de faire repasser rapidement la vitesse de rotation (NR) à la première consigne (NR1). Cette troisième étape régulation peut alors être mise en œuvre instantanément, par exemple en cas de panne d'un ou des moteurs du premier groupe moteur.

La troisième étape régulation peut dans ce cas être mise en œuvre pendant une durée suffisante permettant à un pilote du giravion d'effectuer une descente sécurisée avec un cône de projection nettement supérieur à un cône de projection correspondant à une descente d'urgence en autorotation.

La troisième étape régulation peut également être mise en œuvre pendant une courte durée de façon à conserver une vitesse de rotation (NR) facilitant le pilotage du giravion lors d'une phase ultérieure de vol en autorotation. Dans ce cas, la troisième étape régulation est alors mise en œuvre avant de réaliser une descente urgente.

Par ailleurs, le procédé de régulation peut comporter une étape de surveillance pour mesurer des consignes de commande générées par au moins un organe de commande du giravion, l'étape de surveillance permettant d'anticiper un besoin de puissance pour effectuer une manœuvre du giravion.

En d'autres termes, cette étape de surveillance permet d'identifier et de répondre à un besoin de puissance par exemple pour effectuer une manœuvre d'évitement, tel un cabrage, un piqué, ou encore un virage serré. Pour effectuer cette étape de surveillance, le giravion est alors équipé d'un module anticipateur de position agencé par exemple au niveau de l'organe de commande du pas collectif des pales du rotor principal ou encore de l'organe de commande du pas cyclique des pales du rotor principal.

L'étape de surveillance identifie par exemple une assiette ou un angle de roulis à atteindre trop important en présence d'un rotor principal mis en rotation selon la seconde consigne (NR2, NR2'). Dans ce cas, une telle étape de surveillance est alors mise en œuvre préalablement à la troisième étape régulation et peut permettre de déclencher la mise en œuvre de cette troisième étape régulation.

En pratique suite à la troisième étape de régulation, le procédé de régulation peut comporter une quatrième étape de régulation consistant à réguler un régime de rotation du ou des moteurs principaux en augmentant la consigne courante (NRi), depuis la seconde consigne (NR2, NR2') jusqu'à la première consigne (NR1).

Autrement dit, une fois la vitesse de rotation (NR) du rotor ramenée au niveau de la première consigne (NR1) par le second groupe moteur, la quatrième étape de régulation peut alors être mise œuvre pour augmenter la consigne courante (NRi) transmise au premier groupe moteur. Une telle quatrième étape de régulation permet donc de limiter les sollicitations mécaniques du premier groupe moteur qui ne transmet alors pas de puissance au rotor lors cette phase d'augmentation de la consigne courante (NRi).

La présente invention a aussi pour objet un giravion selon la revendication 14.

En d'autres termes, un tel giravion permet de réguler un régime de rotation du ou des moteurs principaux à un niveau très inférieur à celui correspondant à la première consigne (NR1) sans augmenter le risque de décrochage.

En outre, tant que la vitesse du giravion est constante ou faiblement variable, un tel giravion possède alors la capacité de voler en limitant drastiquement son empreinte acoustique sur l'environnement extérieur.

La norme du vecteur accélération peut par exemple être directement mesurée au moyen d'un accéléromètre équipant le giravion. Cette norme peut aussi être calculée à partir de données relatives à la position ou à la vitesse du giravion par rapport au sol. Au surplus, la consigne courante (NRi) de la vitesse de rotation (NR) peut être préférentiellement réduite tant que la norme du vecteur accélération du giravion est inférieure à $0.5 \text{ m.s}^{-2}$, voire encore préférentiellement, tant que la norme du vecteur accélération du giravion est inférieure à $0.33 \text{ m.s}^{-2}$.

Par ailleurs, le premier moyen d'identification peut par exemple comporter un altimètre pour mesurer une hauteur courante du giravion par rapport au sol, une mémoire pour stocker la hauteur de seuil prédéterminée et une unité de calcul pour comparer la hauteur courante du giravion par rapport à la hauteur de seuil prédéterminée et analyser le résultat de cette première comparaison.

De même, le second moyen d'identification peut par exemple comporter un capteur de vitesse pour mesurer une vitesse de déplacement du giravion par rapport sol, un capteur de position ou d'accélération du giravion et des moyens de calculs pour déterminer une vitesse du giravion par rapport au sol, une mémoire pour stocker la vitesse de seuil prédéterminée et une autre unité de calcul pour comparer la vitesse courante du giravion par rapport à la vitesse de seuil prédéterminée et analyser le résultat de cette seconde comparaison.

En outre, le premier calculateur déterminant la première consigne (NR1) et la ou les unités de calcul effectuant des comparaisons peuvent être distincts les uns des autres ou encore être confondus entre eux.

De même, le premier dispositif de régulation peut être distinct ou confondu avec le deuxième dispositif de régulation.

Avantageusement, le giravion peut comporter :

- un second calculateur pour calculer une valeur courante (Czmi) d'un coefficient de portance moyen (Czm) du rotor principal,
- une unité d'analyse pour comparer la valeur courante (Czmi) du coefficient de portance verticale moyen (Czm) par rapport à une valeur de seuil (Czm1), la seconde consigne (NR2, NR2') dépendant d'un résultat de la comparaison effectuée par l'unité d'analyse.

Ainsi et comme déjà évoqué, la valeur de la seconde consigne (NR2, NR2') peut déprendre de la valeur courante (Czmi) calculée par le second calculateur. En outre, la valeur de seuil (Czm1) peut être préenregistrée dans une première mémoire et/ou être variable et définie par calculs en fonction des conditions de vol telles la pression atmosphérique ou la température de l'air environnant.

Un tel second calculateur et une unité d'analyse peuvent être distincts l'un de l'autre ou encore être confondus entre eux. Au surplus, ils peuvent également être confondus avec le premier calculateur et la ou les unités de calcul effectuant des comparaisons.

En pratique, si la valeur courante (Czmi) reste inférieure à la valeur de seuil (Czm1), le premier dispositif de régulation peut réduire la consigne courante (NRi) jusqu'à atteindre la seconde consigne (NR2), la seconde consigne (NR2) pouvant alors être comprise entre 60% et 85% de la valeur nominale (NRnom). A titre de comparaison, la première consigne (NR1) peut quant à elle être par exemple comprise entre 90% et 110% de la valeur nominale (NRnom).

Dans ce cas, la seconde consigne (NR2) peut alors être fixe et définie par calculs, des tests ou des simulations et être préenregistrée dans une seconde mémoire.

En outre, la seconde consigne (NR2) peut être par exemple choisie égale à 70% de la valeur nominale (NRnom).

Selon un autre aspect de l'invention, si la valeur courante (Czmi) atteint la valeur de seuil (Czm1), le premier dispositif de régulation peut réguler le régime de rotation du moteur principal à la seconde consigne (NR2') correspondant à la consigne courante (NRi) de la vitesse de rotation (NR) pour laquelle la valeur courante (Czmi) est égale à la valeur de seuil (Czm1).

Dans ce cas, la seconde consigne (NR2') peut alors varier en fonction de la valeur courante (Czmi). De plus, le premier dispositif de régulation peut limiter la valeur de la seconde consigne (NR2') à une valeur supérieure à 70% de la valeur nominale (NRnom).

En outre, le deuxième dispositif de régulation peut réguler le fonctionnement du ou des moteurs secondaires selon la première consigne (NR1) de la vitesse de rotation (NR).

Ainsi, par exemple lors d'une panne du ou des moteurs principaux, le deuxième dispositif de régulation peut alors être activé automatiquement pour permettre d'augmenter rapidement la vitesse de rotation (NR) et tendre à la ramener au niveau de la première consigne (NR1). Une telle action permet alors au pilote du giravion de conserver une vitesse de rotation (NR) du rotor suffisante pour atteindre un zone d'atterrissage en toute sécurité voire pour effectuer un atterrissage d'urgence en effectuant une phase de vol en autorotation avec un niveau de sécurité élevé.

Avantageusement, le giravion peut comporter des moyens de surveillance pour mesurer des consignes de commande générées par au moins un organe de commande du giravion, les moyens de surveillance permettant d'anticiper un besoin de puissance pour effectuer une manœuvre du giravion.

Les moyens de surveillance comportent alors des capteurs aptes à mesurer les consignes de commande permettant de piloter par exemple les angles roulis et/ou d'assiette et/ou les valeurs du pas des pales variant cycliquement et collectivement. De telles consignes de commande sont alors comparées avec des valeurs seuil permettant d'anticiper le besoin de puissance pour effectuer par exemple une manœuvre d'évitement telle qu'un virage serré.

En pratique, en cas de besoin de puissance pour effectuer une manœuvre du giravion, le deuxième dispositif de régulation peut réguler le fonctionnement du ou des moteurs secondaires selon la première consigne (NR1) de la vitesse de rotation (NR).

Ainsi comme lors d'une panne du ou des moteurs principaux, le deuxième dispositif de régulation permet d'augmenter rapidement la vitesse de rotation (NR) du rotor pour effectuer une manœuvre d'évitement. Une fois que le rotor atteint la vitesse de rotation (NR) correspondant à la première consigne (NR1) à l'aide du moteur secondaire, alors le premier dispositif de régulation peut réguler à la hausse le régime du moteur principal jusqu'à atteindre la première consigne (NR1).

L'invention et ses avantages apparaîtront avec plus de détails dans le cadre de la description qui suit avec des exemples donnés à titre illustratif en référence aux figures annexées qui représentent :

[Fig 1] la figure 1, un schéma de principe d'un giravion conforme à l'invention,

[Fig 2] la figure 2, une courbe illustrant les variations d'une consigne courante de la vitesse de rotation du rotor principal en fonction du temps, conformément à l'invention,

[Fig 3] la figure 3, des courbes illustrant les variations d'une valeur courante du coefficient de portance verticale moyen et de la consigne courante de la vitesse de rotation du rotor principal en fonction du temps, conformément à l'invention,

[Fig 4] la figure 4, un logigramme illustrant un premier exemple de procédé de régulation conforme à l'invention,

[Fig 5] la figure 5, un logigramme illustrant un deuxième exemple de procédé de régulation conforme à l'invention,

[Fig 6] la figure 6, un logigramme illustrant un troisième exemple de procédé de régulation conforme à l'invention, et [Fig 7] la figure 7, un logigramme illustrant un quatrième exemple de procédé de régulation conforme à l'invention.

Les éléments présents dans plusieurs figures distinctes sont affectés d'une seule et même référence.

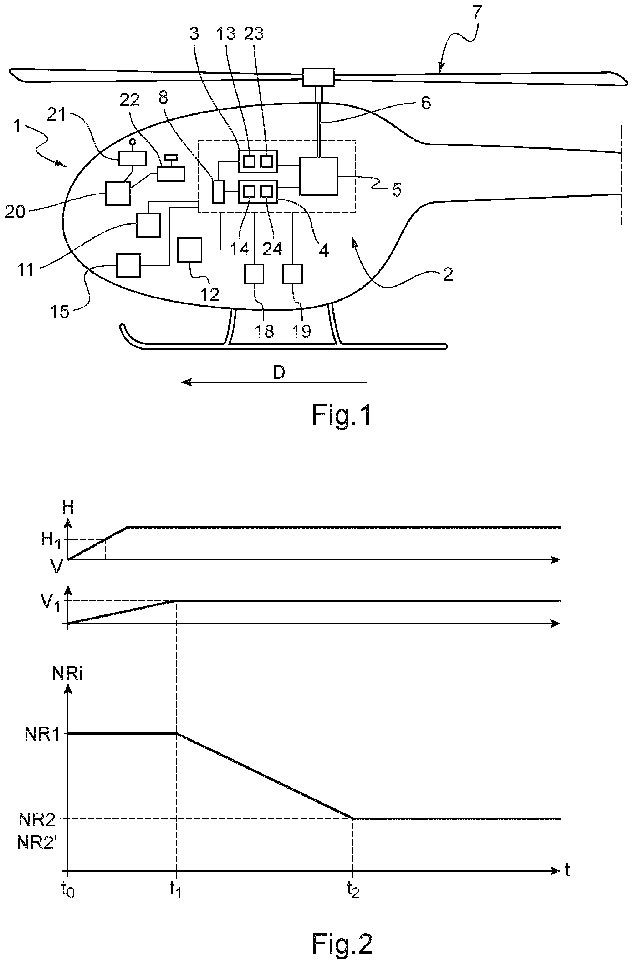

Tel que représenté à la figure 1, un giravion 1 selon l'invention comporte donc un rotor principal 7 tournant à une vitesse de rotation NR, une installation motrice 2 comportant deux groupes moteurs 3 et 4 et une boite de transmission principale de puissance 5 entraînée simultanément ou individuellement par les deux groupes moteurs 3 et 4. La boîte de transmission principale de puissance 5 comporte un arbre principal de sortie 6 solidaire du rotor principal 7.

Par ailleurs, l'installation motrice 2 comporte un premier calculateur 8 permettant de déterminer une première consigne NR1 de la vitesse de rotation NR du rotor principal 7. Cette première consigne NR1 est alors comprise entre 90% et 110% d'une valeur nominale NRnom.

Le premier groupe moteur 3 comprend au moins un moteur principal 13 et au moins un premier dispositif de régulation 23 régulant le fonctionnement du moteur principal 13 selon une consigne courante NRi qui peut être égale au moins temporairement à la première consigne NR1. Un tel moteur principal 13 peut avantageusement être formé par un turbomoteur alimenté en carburant et comportant notamment une turbine liée par une chaine mécanique à un premier arbre d'entrée de la boite de transmission principale de puissance 5.

Le second groupe moteur 4 comprend quant à lui au moins un moteur secondaire 14 et au moins un deuxième dispositif de régulation 24 pour réguler le fonctionnement du moteur secondaire 14. Ce moteur secondaire 14 peut quant à lui être par exemple formé par un moteur électrique alimenté en énergie électrique relié mécaniquement à un deuxième arbre d'entrée de la boite de transmission principale de puissance 5.

En outre, le premier dispositif de régulation 23 et le deuxième dispositif de régulation 24 peuvent être distincts l'un de l'autre ou bien être formé par un dispositif régulation commun.

Le giravion 1 comporte également un premier moyen d'identification 11 pour identifier que le giravion 1 vole à une hauteur H supérieure ou égale à une hauteur de seuil prédéterminée H1 et un deuxième moyen d'identification 12 pour identifier que le giravion 1 vole à une vitesse V supérieure ou égale à une vitesse de seuil prédéterminée V1.

Un tel giravion 1 peut aussi comporter un accéléromètre 15 apte à mesurer des composantes d'un vecteur accélération du giravion 1 dans les airs. Des moyens de calculs permettent alors de déduire la norme d'un tel vecteur accélération. En outre, cette norme du vecteur accélération peut également être calculée à partir de données relatives à la position ou à la vitesse de déplacement du giravion 1 dans les airs.

En outre, si le premier moyen d'identification 11 identifie que le giravion 1 vole à une hauteur H supérieure ou égale à la hauteur de seuil prédéterminée H1 et que le deuxième moyen d'identification 12 identifie que le giravion 1 vole à une vitesse V supérieure ou égale à la vitesse de seuil prédéterminée V1 alors le premier dispositif de régulation 23 est configuré pour réguler un régime de rotation du moteur principal 13 en réduisant progressivement une consigne courante NRi de la vitesse de rotation NR d'un incrément i en pourcentage de la consigne courante (NRi) par seconde. Une telle réduction de la consigne courante NRi est donc opérée depuis la première consigne NR1 jusqu'à une seconde consigne NR2, NR2' inférieure à la première consigne NR1.

De plus, cette réduction de la consigne courante NRi de la vitesse de rotation NR est effectuée tant que la norme du vecteur accélération du giravion 1 est inférieure à 1 m.s$^{-2}$, préférentiellement inférieure à 0,5 m.s$^{-2}$, voire encore préférentiellement inférieure à 0,33 m.s$^{-2}$. Une telle accélération du giravion 1 est alors représentative d'une vitesse stable et/ou quasi constante du giravion 1 par rapport au sol.

Une telle diminution de la consigne courante NRi peut donc, telle que représentée à la figure 2, s'effectuer linéairement entre deux instants t1 et t2 pour atteindre la seconde consigne NR2, NR2' à partir de l'instant t2.

Par ailleurs, en cas de panne du moteur principal 13 ou en présence d'un soudain besoin de puissance nécessitant une augmentation rapide de la vitesse de rotation NR du rotor principal 7, le deuxième dispositif de régulation 24 peut réguler instantanément le fonctionnement de chaque moteur secondaire 14 selon la première consigne NR1.

En outre, le giravion 1 comporte également un second calculateur 18 pour calculer une valeur courante Czmi d'un coefficient de portance moyen Czm du rotor principal et une unité d'analyse 19 pour comparer cette valeur courante Czmi du coefficient de portance verticale moyen Czm par rapport à une valeur de seuil Czm1.

Par ailleurs, dans ce cas la valeur de la seconde consigne NR2, NR2' dépend alors du résultat de cette comparaison effectuée par l'unité d'analyse 19.

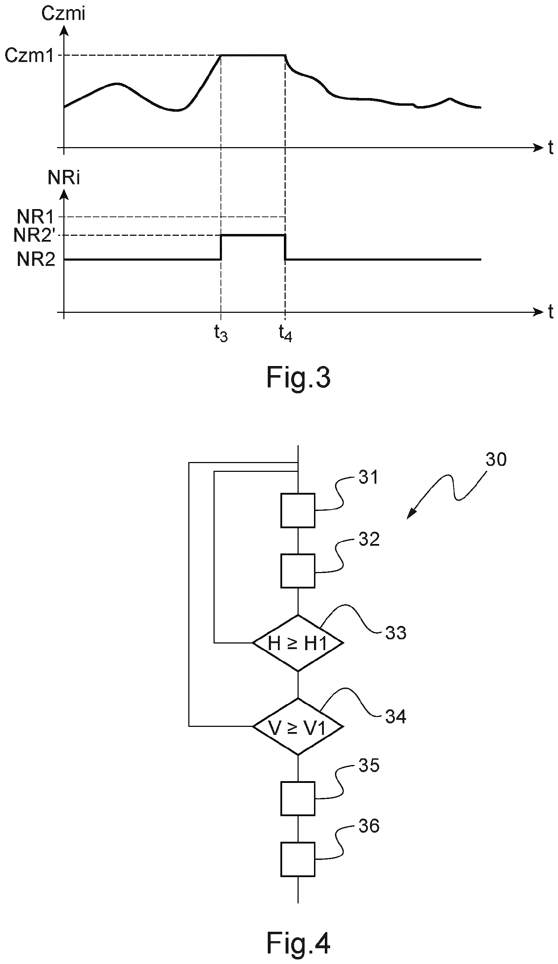

En effet telle que représentée à la figure 3, la consigne courante NRi peut varier sous la dépendance de la valeur courante Czmi du coefficient de portance verticale moyen Czm.

Avant l'instant t3, la valeur courante Czmi est inférieure à la valeur de seuil Czm1 et par suite la consigne courante NRi peut être choisie égale à la seconde consigne NR2.

Entre les instants t3 et t4, la valeur courante Czmi est plafonnée en étant maintenue égale à la valeur de seuil Czm1. Dans ce cas, la consigne courante NRi peut être assignée à la seconde consigne NR2' et être supérieure à la seconde consigne NR2.

En pratique, la seconde consigne NR2 est comprise entre 60% et 85% de la valeur nominale NRnom tandis que la seconde consigne NR2' est comprise entre 70% et 100% de cette valeur nominale NRnom.

Par ailleurs et en référence à la figure 1, le giravion 1 peut comporter également des moyens de surveillance 20 pour mesurer des consignes de commande générées par un organe de commande tel qu'un levier de commande du pas dit « collectif » 21 et un manche de commande du pas dit « cyclique » 22 du giravion 1.

En outre, de tels moyens de surveillance 20 permettent alors d'anticiper un besoin de puissance pour effectuer une manœuvre par exemple d'évitement tel un piqué, un cabrage ou un virage serré.

Telle que représentée aux figures 4 à 7, l'invention se rapporte également à un procédé de régulation 30, 30', 40, 50 de l'installation motrice 2 équipant le giravion 1.

Ainsi, la figure 4 illustre un premier exemple de procédé de régulation 30 comporte une étape de détermination 31 de la première consigne NR1 de la vitesse de rotation NR du rotor principal 7 puis une première étape de régulation 32 du fonctionnement du moteur principal 13 selon la une consigne courante NRi égale à la première consigne NR1.

Le procédé de régulation 30 comporte ensuite une première étape d'identification 33 permettant d'identifier que le giravion 1 vole à la hauteur H supérieure ou égale à la hauteur de seuil prédéterminée H1. Ainsi, tant que la hauteur H est inférieure à la hauteur de seuil prédéterminée H1, les étapes de détermination 31 de la première consigne NR1 et de première régulation 32 sont mises en œuvre.

Lorsque la hauteur du giravion 1 est par exemple supérieure à une hauteur de seuil de 1500 pieds (environ 457 mètres), le procédé 30 comporte une deuxième étape d'identification 34 permettant d'identifier que le giravion 1 vole à une vitesse V supérieure ou égale à une vitesse de seuil prédéterminée V1.

Comme précédemment, tant que la vitesse V est inférieure à la vitesse de seuil prédéterminée V1, le procédé 30 retourne à l'étape de détermination 31 de la première consigne NR1. Une telle vitesse de seuil prédéterminée V1 peut par exemple être choisie égale à 80 nœuds (environ 41 m.s$^{-1}$).

En revanche, lorsque la vitesse V devient supérieure ou égale à la vitesse de seuil prédéterminée V1, le procédé 30 comporte une étape d'identification 35 de la norme d'un vecteur accélération du giravion 1.

Un tel procédé de régulation 30 comporte alors ensuite une seconde étape de régulation 36 consistant à réguler chaque moteur principal 13 en réduisant progressivement la consigne courante NRi d'un incrément i en pourcentage de la consigne courante NRi par seconde, depuis la première consigne NR1 jusqu'à une seconde consigne NR2 inférieure à la première consigne NR1.

En outre, une telle seconde étape de régulation 36 est alors opérée tant que la norme du vecteur accélération du giravion 1 est inférieure à 1 m.s$^{-2}$, préférentiellement inférieure à 0,5 m.s$^{-2}$, voire encore préférentiellement inférieure à 0,33 m.s$^{-2}$.

Selon ce premier exemple de procédé de régulation 30, une telle seconde étape de régulation 36 peut être mise œuvre manuellement par un pilote du giravion 1 désirant réguler chaque moteur principal 13 avec une consigne courante NRi très fortement réduite par rapport à la valeur nominale NRnom et permettant ainsi d'abaisser, pendant au moins une phase de vol, le niveau de l'empreinte acoustique du giravion 1.

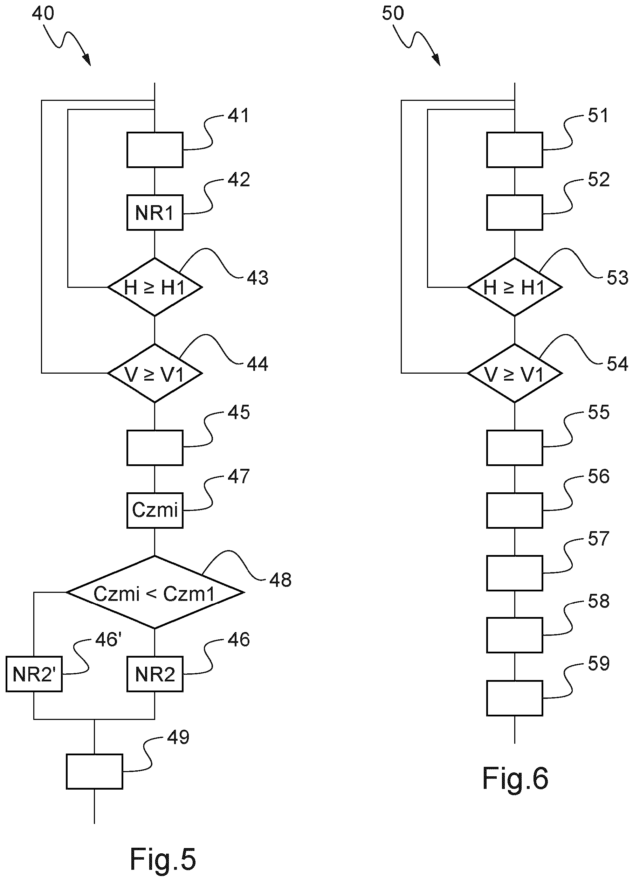

Tel que représenté à la figure 5, un deuxième exemple de procédé de régulation 40 comporte comme précédemment les étapes de détermination 41 de la première consigne NR1, de première régulation 42 du fonctionnement du moteur principal 13, d'identification 43, 44 et 45.

Un tel procédé de régulation 40 comporte également une étape de calcul 47 de la valeur courante Czmi du coefficient de portance verticale moyen Czm et une étape de comparaison 48 de la valeur courante Czmi par rapport à la valeur de seuil Czm1. Dans ce cas, la valeur de la seconde consigne NR2, NR2' dépend alors d'un résultat de l'étape de comparaison 48.

Par ailleurs, un tel procédé de régulation 40 comporte alors deux secondes étapes de régulation 46, 46' pour, en fonction du résultat de l'étape de comparaison 48, réguler chaque moteur principal 13 en réduisant progressivement la consigne courante NRi depuis la première consigne NR1 jusqu'à la seconde consigne NR2 ou jusqu'à la seconde consigne NR2'.

Comme précédemment décrite, la seconde étape de régulation 46 peut alors réguler chaque moteur principal 13 en réduisant progressivement la consigne courante NRi depuis la première consigne NR1 jusqu'à la seconde consigne NR2 qui est dans ce cas prédéterminée et être par exemple comprise entre 60% et 85% de la valeur nominale NRnom.

En revanche, dans le cas où la valeur courante Czmi atteint la valeur de seuil Czm1, alors l'autre seconde étape de régulation 46' régule chaque moteur principal 13 en réduisant progressivement la consigne courante NRi depuis la première consigne NR1 jusqu'à la la seconde consigne NR2' correspondant à la consigne courante NRi pour laquelle la valeur courante Czmi du coefficient de portance verticale moyen Czm est égale à la valeur de seuil Czm1.

En outre, la seconde étape de régulation 46, 46' peut être mise en œuvre automatiquement sans nécessiter une action particulière du pilote du giravion 1.

Par ailleurs, tel que représenté le procédé de régulation 40 peut également comporter une étape de limitation 49 à une valeur réduite Vh1 à une vitesse maximale admissible Vh correspondant à la vitesse d'avancement du giravion 1 lorsque chaque moteur principal 13 est piloté à son niveau de puissance maximale en continu. Une valeur réduite Vh1 peut par exemple être égale à 90% de la vitesse Vh.

Tel que représenté à la figure 6, un troisième exemple de procédé de régulation 50 comporte comme précédemment les étapes de détermination 51 de la première consigne NR1, de première régulation 52 du fonctionnement de chaque moteur principal 13, d'identification 53, 54 et 55 et de seconde régulation 56.

Par ailleurs, un tel procédé de régulation 50 comporte une étape de surveillance 57 de manière à mesurer des consignes de commande générées par les organes de commande 21 et 22 du giravion 1. Cette étape de surveillance 57 peut alors permettre d'anticiper un besoin de puissance pour effectuer une manœuvre du giravion 1.

Ainsi, le procédé de régulation 50 peut alors comporter une troisième étape régulation 58 pour réguler, au moins temporairement, le fonctionnement du moteur secondaire 14 selon la première consigne NR1 de la vitesse de rotation NR.

Dans ce cas, et lorsque le rotor principal 7 a atteint la vitesse de rotation correspondant la première consigne NR1, le procédé 50 peut alors comporter une quatrième étape de régulation 59 permettant de réguler le régime de rotation du moteur principal 13 en augmentant sa consigne courante NRi, depuis la seconde consigne NR2, NR2' jusqu'à la première consigne NR1.

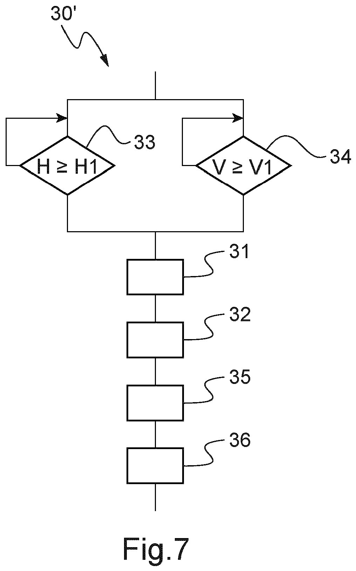

Tel que représenté à la figure 7, un quatrième exemple de procédé de régulation 30' comporte comme précédemment les étapes de détermination 31 de la première consigne NR1, de première régulation 32 du fonctionnement de chaque moteur principal 13, d'identification 33, 34 et 35 et de seconde régulation 36. Cependant dans ce quatrième exemple de procédé de régulation 30', et contrairement au premier exemple de procédé de régulation 30, les étapes d'identification 33 et 34 peuvent être mise en œuvre préalablement à l'étape de détermination 31 de la première consigne NR1.

Le procédé de régulation 30' peut alors comporter une étape de régulation préliminaire (non représentée) du fonctionnement de chaque moteur principal 13 selon une consigne courante NRi égale à une consigne initiale NR0. En outre, une telle consigne initiale NR0 peut par exemple correspondre à une consigne adaptée pour permettre au giravion 1 d'effectuer une phase de vol stationnaire par rapport au sol.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

**1.** Procédé de régulation (30, 30', 40, 50) d'une installation motrice (2) d'un giravion (1), ladite installation motrice (2) comportant deux groupes moteurs (3 et 4) et une boite de transmission principale de puissance (5), les deux groupes moteurs (3 et 4) étant aptes à entrainer mécaniquement ladite boîte de transmission principale de puissance (5) afin de mettre en rotation un arbre principal de sortie (6) de ladite boîte de transmission principale de puissance (5), ledit arbre principal de sortie (6) étant solidaire en rotation d'un rotor principal (7) dudit giravion (1), ledit rotor principal (7) tournant à une vitesse de rotation (NR), lesdits deux groupes moteurs (3 et 4) comportant un premier groupe moteur (3) comprenant au moins un moteur principal (13) et un second groupe moteur (4) comprenant au moins un moteur secondaire (14), ledit procédé de régulation (30, 30', 40, 50) comportant au moins :

- une étape de détermination (31, 41, 51) d'une première consigne (NR1) de ladite vitesse de rotation (NR) dudit rotor principal (7),
- une première étape de régulation (32, 42, 52) du fonctionnement dudit au moins un moteur principal (13) selon une consigne courante (NRi) de ladite vitesse de rotation (NR) et étant égale à ladite première consigne (NR1) de ladite vitesse de rotation (NR),
- une première étape d'identification (33, 43, 53) permettant d'identifier que ledit giravion (1) vole à une hauteur (H) supérieure ou égale à une hauteur de seuil prédéterminée (H1),
- une deuxième étape d'identification (34, 44, 54) permettant d'identifier que ledit giravion (1) vole à une vitesse

(V) supérieure ou égale à une vitesse de seuil prédéterminée (V1), et ledit procédé de régulation (30, 30', 40, 50) comportant une seconde étape de régulation (36, 46, 46', 56) apte à être mise en œuvre lorsque la première étape d'identification et la deuxième étape d'identification sont simultanément vérifiées, ladite seconde étape de régulation (36, 46, 46', 56) consistant à réguler un régime de rotation dudit au moins un moteur principal (13) en réduisant progressivement une consigne courante (NRi) d'un incrément i en pourcentage de la consigne courante (NRi) par seconde, depuis ladite première consigne (NR1) jusqu'à une seconde consigne (NR2, NR2') inférieure à ladite première consigne (NR1), ladite seconde étape de régulation (36, 46, 46', 56) étant mise en œuvre lors d'une phase de vol et en fonction de la hauteur (H) de vol dudit giravion (1), tant qu'une norme d'un vecteur accélération dudit giravion (1) est inférieure à 1 m.s$^{-2}$.

2. Procédé selon la revendication 1, dans lequel l'incrément i est compris entre -0,2% et - 0,6% de la consigne courante (NRi) par seconde.

3. Procédé selon l'une quelconque des revendications 1 à 2 ledit procédé de régulation (40) comporte une étape de calcul (47) d'une valeur courante (Czmi) d'un coefficient de portance verticale moyen (Czm) dudit rotor principal (7) et une étape de comparaison (48) de ladite valeur courante (Czmi) du coefficient de portance verticale moyen (Czm) par rapport à une valeur de seuil (Czm1), ladite seconde consigne (NR2, NR2') dépendant d'un résultat de ladite étape de comparaison (48).

4. Procédé selon la revendication 3, dans lequel lors de ladite seconde étape de régulation (46) si ladite valeur courante (Czmi) reste inférieure à ladite valeur de seuil (Czm1), ladite seconde consigne (NR2) est comprise entre 60% et 85% de ladite valeur nominale (NRnom).

5. Procédé selon l'une quelconque des revendications 3 à 4, dans lequel lors de ladite seconde étape de régulation (46') si ladite valeur courante (Czmi) atteint ladite valeur de seuil (Czm1), ladite seconde consigne (NR2') correspond à ladite consigne courante (NRi) de ladite vitesse de rotation (NR).

6. Procédé selon l'une quelconque des revendications 3 à 5, ladite seconde consigne (NR2') est comprise entre 70% et 100% de ladite valeur nominale (NRnom).

7. Procédé selon l'une quelconque des revendications 3 à 6, ladite valeur de seuil (Czm1) est comprise entre 0,4 et 0,8.

8. Procédé selon l'une quelconque des revendications 1 à 7, ladite seconde étape de régulation (36) est mise œuvre manuellement par un pilote dudit giravion (1).

9. Procédé selon l'une quelconque des revendications 1 à 7, ladite seconde étape de régulation (46, 46') est mise en œuvre automatiquement.

10. Procédé selon l'une quelconque des revendications 1 à 9, dans lequel ledit procédé de régulation (40) comporte une étape de limitation (49) à une valeur réduite (Vh1) d'une vitesse maximale admissible (Vh) correspondant à la vitesse d'avancement dudit giravion (1) lorsque chaque moteur principal (13) est piloté à son niveau de puissance maximale en continu.

11. Procédé selon l'une quelconque des revendications 1 à 10, dans lequel ledit procédé de régulation (50) comporte une troisième étape régulation (58) faisant suite à ladite seconde étape de régulation (56) pour réguler le fonctionnement dudit au moins un moteur secondaire (14) selon ladite première consigne (NR1) de ladite vitesse de rotation (NR).

12. Procédé selon l'une quelconque des revendications 1 à 11, dans lequel ledit procédé de régulation (50) comporte une étape de surveillance (57) pour mesurer des consignes de commande générées par au moins un organe de commande (21, 22) dudit giravion (1), ladite étape de surveillance (57) permettant d'anticiper un besoin de puissance pour effectuer une manœuvre dudit giravion (1).

13. Procédé selon la revendication 12, dans lequel suite à ladite troisième étape de régulation (58), ledit procédé de régulation (50) comporte une quatrième étape de régulation (59) consistant à réguler un régime de rotation dudit au moins un moteur principal (13) en augmentant ladite consigne courante (NRi), depuis ladite seconde consigne (NR2, NR2') jusqu'à ladite première consigne (NR1).

**14.** Giravion (1) comportant :

• une installation motrice (2) comportant deux groupes moteurs (3 et 4) et une boite de transmission principale de puissance (5), les deux groupes moteurs (3 et 4) étant aptes à entrainer mécaniquement ladite boîte de transmission principale de puissance (5) afin de mettre en rotation un arbre principal de sortie (6) de ladite boîte de transmission principale de puissance (5), ledit arbre principal de sortie (6) étant solidaire en rotation d'un rotor principal (7) dudit giravion (1), ledit rotor principal (7) tournant à une vitesse de rotation (NR), ladite installation motrice (2) comportant un premier calculateur (8) déterminant une première consigne (NR1) de ladite vitesse de rotation (NR) dudit rotor principal (7), ladite première consigne (NR1) étant comprise entre 90% et 110% d'une valeur nominale (NRnom), lesdits deux groupes moteurs (3 et 4) comportant d'une part un premier groupe moteur (3) comprenant au moins un moteur principal (13) et un premier dispositif de régulation (23), ledit premier dispositif de régulation (23) régulant le fonctionnement dudit au moins un moteur principal (13) selon une consigne courante (NRi) de ladite vitesse de rotation (NR) et étant égale à ladite première consigne (NR1) de ladite vitesse de rotation (NR) dudit rotor principal (7), et d'autre part un second groupe moteur (4) comprenant au moins un moteur secondaire (14) et un deuxième dispositif de régulation (24), ledit deuxième dispositif de régulation (24) régulant le fonctionnement dudit au moins un moteur secondaire (14),
• un premier moyen d'identification (11) permettant d'identifier que ledit giravion (1) vole à une hauteur (H) supérieure ou égale à une hauteur de seuil prédéterminée (H1), et
• un deuxième moyen d'identification (12) permettant d'identifier que ledit giravion (1) vole à une vitesse (V) supérieure ou égale à une vitesse de seuil prédéterminée (V1), dans lequel si ledit premier moyen d'identification (11) identifie que ledit giravion (1) vole à une hauteur (H) supérieure ou égale à ladite hauteur de seuil prédéterminée (H1) et simultanément que ledit deuxième moyen d'identification (12) identifie que ledit giravion (1) vole à une vitesse (V) supérieure ou égale à ladite vitesse de seuil prédéterminée (V1), ledit premier dispositif de régulation (23) est configuré pour réguler un régime de rotation dudit au moins un moteur principal (13) en réduisant progressivement la consigne courante (NRi) d'un incrément i en pourcentage de la consigne courante (NRi) par seconde, depuis ladite première consigne (NR1) jusqu'à une seconde consigne (NR2, NR2') inférieure à ladite première consigne (NR1), ladite consigne courante (NRi) étant réduite lors d'une phase de vol et en fonction de la hauteur (H) de vol dudit giravion (1), tant qu'une norme d'un vecteur accélération dudit giravion (1) est inférieure à 1 m.s$^{-2}$

**15.** Giravion selon la revendication 14, ledit giravion (1) comporte :

• un second calculateur (18) pour calculer une valeur courante (Czmi) d'un coefficient de portance moyen (Czm) dudit rotor principal (7),
• une unité d'analyse (19) pour comparer ladite valeur courante (Czmi) du coefficient de portance verticale moyen (Czm) par rapport à une valeur de seuil (Czm1), ladite seconde consigne (NR2, NR2') dépendant d'un résultat de ladite comparaison effectuée par ladite unité d'analyse (19).

**16.** Giravion selon la revendication 15, dans lequel si ladite valeur courante (Czmi) reste inférieure à ladite valeur de seuil (Czm1), le premier dispositif de régulation (23) réduit ladite consigne courante (NRi) jusqu'à atteindre ladite seconde consigne (NR2), ladite seconde consigne (NR2) étant comprise entre 60% et 85% de ladite valeur nominale (NRnom).

**17.** Giravion selon l'une quelconque des revendications 15 à 16, dans lequel si ladite valeur courante (Czmi) atteint ladite valeur de seuil (Czm1), le premier dispositif de régulation (23) régule ledit régime de rotation dudit au moins un moteur principal (13) à ladite seconde consigne (NR2') correspondant à la consigne courante (NRi) de ladite vitesse de rotation (NR) pour laquelle ladite valeur courante (Czmi) est égale à la valeur de seuil (Czm1).

**18.** Giravion selon l'une quelconque des revendications 14 à 17, ledit deuxième dispositif de régulation (24) régule le fonctionnement dudit au moins un moteur secondaire (14) selon ladite première consigne (NR1) de ladite vitesse de rotation (NR).

**19.** Giravion selon l'une quelconque des revendications 14 à 17, ledit giravion (1) comporte des moyens de surveillance (20) pour mesurer des consignes de commande générées par au moins un organe de commande (21, 22) dudit giravion (1), lesdits moyens de surveillance (20) permettant d'anticiper un besoin de puissance pour effectuer une manœuvre dudit giravion (1).

**20.** Giravion selon la revendication 19, dans lequel en cas de besoin de puissance pour effectuer une manœuvre dudit giravion (1), ledit deuxième dispositif de régulation (24) régule le fonctionnement dudit au moins un moteur secondaire (14) selon ladite première consigne (NR1) de ladite vitesse de rotation (NR).

**Patentansprüche**

1. Verfahren zum Regeln (30, 30', 40, 50) einer Antriebsanlage (2) eines Drehflügelflugzeugs (1), wobei die Antriebsanlage (2) zwei Antriebseinheiten (3 und 4) und ein Hauptleistungsgetriebe (5) umfasst, wobei die beiden Antriebseinheiten (3 und 4) geeignet sind, das Hauptleistungsgetriebe (5) mechanisch anzutreiben, um eine Hauptabtriebswelle (6) des Hauptleistungsgetriebes (5) drehanzutreiben, die Hauptabtriebswelle (6) drehfest mit einem Hauptrotor (7) des Drehflügelflugzeugs (1) verbunden ist, wobei sich der Hauptrotor (7) mit einer Drehgeschwindigkeit (NR) dreht, die beiden Antriebseinheiten (3 und 4) eine erste Antriebseinheit (3) mit mindestens einem Hauptmotor (13) und eine zweite Antriebseinheit (4) mit mindestens einem Nebenmotor (14) umfassen, wobei das Regelverfahren (30, 30', 40, 50) mindestens umfasst:

   • einen Bestimmungsschritt des Bestimmens (31, 41, 51) eines ersten Sollwerts (NR1) der Drehgeschwindigkeit (NR) des Hauptrotors (7),
   • einen ersten Regelungsschritt des Regelns (32, 42, 52) des Betriebs des mindestens einen Hauptmotors (13) anhand eines aktuellen Sollwerts (NRi) der Drehgeschwindigkeit (NR), der gleich dem ersten Sollwert (NR1) der Drehgeschwindigkeit (NR) ist,
   • einen ersten Erkennungsschritt (33, 43, 53) zum Erkennen, dass das Drehflügelflugzeug (1) in einer Höhe (H) fliegt, die größer oder gleich einer vorgegebenen Schwellenhöhe (H1) ist,
   • einen zweiten Erkennungsschritt (34, 44, 54) zum Erkennen, dass das Drehflügelflugzeug (1) mit einer Geschwindigkeit (V) fliegt, die größer oder gleich einer vorgegebenen Schwellengeschwindigkeit (V1) ist, und
   wobei das besagte Regelverfahren (30, 30', 40, 50) einen zweiten Regelungsschritt (36, 46, 46', 56) umfasst, der ausgeführt werden kann, wenn der erste Erkennungsschritt und der zweite Erkennungsschritt gleichzeitig verifiziert werden, wobei der besagte zweite Regelungsschritt (36, 46, 46', 56) darin besteht, eine Drehgeschwindigkeit des besagten mindestens einen Hauptmotors (13) zu regeln, indem ein aktueller Sollwert (NRi) fortschreitend von dem ersten Sollwert (NR1) um ein Inkrement i als Prozentsatz des aktuellen Sollwerts (NRi) pro Sekunde auf einen zweiten Sollwert (NR2, NR2') verringert wird, der niedriger als der erste Sollwert (NR1) ist, wobei der zweite Regelungsschritt (36, 46, 46', 56) während einer Flugphase und in Abhängigkeit von der Flughöhe (H) des Drehflügelflugzeugs (1) durchgeführt wird, solange eine Norm eines Beschleunigungsvektors des Drehflügelflugzeugs (1) kleiner als 1 ms$^{-2}$ ist.

2. Verfahren nach Anspruch 1, bei dem das Inkrement i zwischen - 0,2 % und -0,6 % des aktuellen Sollwerts (NRi) pro Sekunde liegt.

3. Verfahren nach einem der Ansprüche 1 bis 2, bei dem das Regelverfahren (40) einen Schritt des Berechnens (47) eines aktuellen Wertes (Czmi) eines mittleren vertikalen Auftriebskoeffizienten (Czm) des Hauptrotors (7) und einen Schritt des Vergleichens (48) des aktuellen Wertes (Czmi) des mittleren vertikalen Auftriebskoeffizienten (Czm) mit einem Schwellenwert (Czm1) umfasst, wobei der zweite Sollwert (NR2, NR2') von einem Ergebnis des Vergleichsschrittes (48) abhängt.

4. Verfahren nach Anspruch 3, bei dem,
   wenn in dem zweiten Regelungsschritt (46) der aktuelle Wert (Czmi) unter dem Schwellenwert (Czm1) bleibt, der zweite Sollwert (NR2) zwischen 60% und 85% des Nennwertes (NRnom) liegt.

5. Verfahren nach einem der Ansprüche 3 bis 4, bei dem
   wenn in dem zweiten Regelungsschritt (46') der aktuelle Wert (Czmi) den Schwellenwert (Czm1) erreicht, der zweite Sollwert (NR2') dem aktuellen Sollwert (NRi) der Drehgeschwindigkeit (NR) entspricht.

6. Verfahren nach einem der Ansprüche 3 bis 5, bei dem
   der zweite Sollwert (NR2') zwischen 70 % und 100 % des Nennwertes (NRnom) liegt.

7. Verfahren nach einem der Ansprüche 3 bis 6, bei dem der Schwellenwert (Czm1) zwischen 0,4 und 0,8 liegt.

8. Verfahren nach einem der Ansprüche 1 bis 7, bei dem der zweite Regelungsschritt (36) manuell von einem Piloten des Drehflügelflugzeugs (1) ausgeführt wird.

9. Verfahren nach einem der Ansprüche 1 bis 7, bei dem der zweite Regelungsschritt (46, 46') automatisch durchgeführt wird.

10. Verfahren nach einem der Ansprüche 1 bis 9, bei dem
das Regelverfahren (40) einen Schritt des Begrenzens (49) einer maximal zulässigen Geschwindigkeit (Vh), die der Vorwärtsgeschwindigkeit des Drehflügelflugzeugs (1) entspricht, auf einen reduzierten Wert (Vh1) umfasst, wenn jeder Hauptmotor (13) kontinuierlich mit seinem maximalen Leistungsniveau betrieben wird.

11. Verfahren nach einem der Ansprüche 1 bis 10, bei dem
das Regelverfahren (50) einen dritten Regelungsschritt (58) umfasst, der auf den zweiten Regelungsschritt (56) folgt, um den Betrieb des mindestens einen Nebenmotors (14) anhand des ersten Sollwerts (NR1) der Drehgeschwindigkeit (NR) zu regeln.

12. Verfahren nach einem der Ansprüche 1 bis 11, bei dem
das Regelverfahren (50) einen Überwachungsschritt (57) zum Messen von von mindestens einem Steuerelement (21, 22) des Drehflügelflugzeugs (1) erzeugten Steuersollwerten umfasst, wobei der Überwachungsschritt (57) es ermöglicht, einen Leistungsbedarf zur Durchführung eines Manövers des Drehflügelflugzeugs (1) vorauszusehen.

13. Verfahren nach Anspruch 12, bei dem das Regelungsverfahren (50) nach dem dritten Regelungsschritt (58) einen vierten Regelungsschritt (59) umfasst, der darin besteht, eine Drehgeschwindigkeit des mindestens einen Hauptmotors (13) zu regeln, indem der aktuelle Sollwert (NRi) von dem zweiten Sollwert (NR2, NR2') bis auf den ersten Sollwert (NR1) erhöht wird.

14. Drehflügelflugzeug (1), umfassend:

• eine Antriebsanlage (2) mit zwei Antriebseinheiten (3 und 4) und einem Hauptleistungsgetriebe (5), wobei die beiden Antriebseinheiten (3 und 4) in der Lage sind, das Hauptleistungsgetriebe (5) mechanisch anzutreiben, um eine Hauptabtriebswelle (6) des Hauptleistungsgetriebes (5) in Drehung zu versetzen, wobei die Hauptabtriebswelle (6) drehfest mit einem Hauptrotor (7) des Drehflügelflugzeugs (1) verbunden ist, der Hauptrotor (7) sich mit einer Drehgeschwindigkeit (NR) dreht, wobei die Antriebsanlage (2) einen ersten Rechner (8) umfasst, der einen ersten Sollwert (NR1) für die Drehgeschwindigkeit (NR) des Hauptrotors (7) bestimmt, wobei der erste Sollwert (NR1) zwischen 90 % und 110 % eines Nennwerts (NRnom) liegt, wobei die beiden Antriebseinheiten (3 und 4) einerseits eine erste Antriebseinheit (3), die mindestens einen Hauptmotor (13) und eine erste Regelvorrichtung (23) umfasst, wobei die erste Regelvorrichtung (23) den Betrieb des mindestens einen Hauptmotors (13) anhand eines aktuellen Sollwerts (NRi) der Drehgeschwindigkeit (NR) regelt und gleich dem ersten Sollwert (NR1) der Drehgeschwindigkeit (NR) des Hauptrotors (7) ist, und andererseits eine zweite Antriebseinheit (4), die mindestens einen Nebenmotor (14) und eine zweite Regelvorrichtung (24) umfasst, aufweisen, wobei die zweite Regelvorrichtung (24) den Betrieb des mindestens einen Nebenmotors (14) regelt,
• eine erste Erkennungseinrichtung (11) zum Erkennen, dass das Drehflügelflugzeug (1) in einer Höhe (H) fliegt, die größer als oder gleich einer vorgegebenen Schwellenhöhe (H1) ist, und
• eine zweite Erkennungseinrichtung (12) zum Erkennen, dass das Drehflügelflugzeug (1) mit einer Geschwindigkeit (V) fliegt, die größer oder gleich einer vorgegebenen Schwellengeschwindigkeit (V1) ist, wobei, wenn die erste Erkennungseinrichtung (11) erkennt, dass das Drehflügelflugzeug (1) in einer Höhe (H) fliegt, die größer oder gleich der vorgegebenen Schwellenhöhe (H1) ist, und gleichzeitig die zweite Erkennungseinrichtung (12) erkennt, dass das Drehflügelflugzeug (1) mit einer Geschwindigkeit (V) fliegt, die größer oder gleich der vorgegebenen Schwellengeschwindigkeit (V1) ist, die erste Regelungsvorrichtung (23) konfiguriert ist, eine Drehgeschwindigkeit des mindestens einen Hauptmotors (13) durch fortschreitendes Verringern des aktuellen Sollwerts (NRi) um ein Inkrement i als Prozentsatz des aktuellen Sollwerts (NRi) pro Sekunde von dem ersten Sollwert (NR1) auf einem zweiten Sollwert (NR2, NR2') zu verringern, der niedriger ist als der erste Sollwert (NR1), wobei der aktuelle Sollwert (NRi) während einer Flugphase und in Abhängigkeit von der Flughöhe (H) des Drehflügelflugzeugs (1) reduziert wird, solange eine Norm eines Beschleunigungsvektors des Drehflügelflugzeugs (1) kleiner als 1 ms$^{-2}$ ist.

15. Drehflügelflugzeug nach Anspruch 14, wobei das Drehflügelflugzeug (1) umfasst:

• einen zweiten Rechner (18) zum Berechnen eines aktuellen Wertes (Czmi) eines mittleren Auftriebskoeffizienten (Czm) des Hauptrotors (7),
• eine Analyseeinheit (19) zum Vergleichen des aktuellen Wertes (Czmi) des mittleren vertikalen Auftriebskoeffizienten (Czm) mit einem Schwellenwert (Czmi), wobei der zweite Sollwert (NR2, NR2') von einem Ergebnis des von der Analyseeinheit (19) durchgeführten Vergleichs abhängt.

16. Drehflügelflugzeug nach Anspruch 15, bei dem, wenn der aktuelle Wert (Czmi) niedriger als der Schwellenwert (Czm1) bleibt, die erste Regelvorrichtung (23) den aktuellen Sollwert (NRi) reduziert, bis der zweite Sollwert (NR2) erreicht ist, wobei der zweite Sollwert (NR2) zwischen 60 % und 85 % des Nennwertes (NRnom) liegt.

17. Drehflügelflugzeug nach einem der Ansprüche 15 bis 16, bei dem, wenn der aktuelle Wert (Czmi) den Schwellenwert (Czm1) erreicht, die erste Regelvorrichtung (23) die Drehgeschwindigkeit des mindestens einen Hauptmotors (13) auf den zweiten Sollwert (NR2') regelt, der dem aktuellen Sollwert (NRi) der Drehgeschwindigkeit (NR) entspricht, für den der aktuelle Wert (Czmi) gleich dem Schwellenwert (Czm1) ist.

18. Drehflügelflugzeug nach einem der Ansprüche 14 bis 17, bei dem die zweite Regelvorrichtung (24) den Betrieb des mindestens einen Nebenmotors (14) anhand des ersten Sollwerts (NR1) der Drehgeschwindigkeit (NR) regelt.

19. Drehflügelflugzeug nach einem der Ansprüche 14 bis 17, bei dem das Drehflügelflugzeug (1) Überwachungsmittel (20) zum Messen von von mindestens einem Steuerelement (21, 22) des Drehflügelflugzeugs (1) erzeugten Steuersollwerten umfasst, wobei die Überwachungsmittel (20) es ermöglichen, einen Leistungsbedarf zur Durchführung eines Manövers des Drehflügelflugzeugs (1) vorherzusehen.

20. Drehflügelflugzeug nach Anspruch 19, bei dem im Falle eines Leistungsbedarfs zur Durchführung eines Manövers des Drehflügelflugzeugs (1) die zweite Regelvorrichtung (24) den Betrieb des mindestens einen Nebenmotors (14) anhand des ersten Sollwertes (NR1) der Drehgeschwindigkeit (NR) regelt.

**Claims**

1. Process for the regulation (30, 30', 40, 50) of an engine installation (2) of a rotorcraft (1), said engine installation (2) having two engine groups (3 and 4) and a main power gearbox (5), the two engine groups (3 and 4) being suitable to mechanically drag said main power gearbox (5) in order to set in rotation a main output shaft (6) of said main power gearbox (5), said main output shaft (6) supporting the rotation of a main rotor (7) of said rotorcraft (1), said main rotor (7) turning at a rotation speed (NR), said two engine groups (3 and 4) having a first engine group (3) comprising at least one main engine (13) and a second engine group (4) comprising at least one secondary engine (14), said regulation process (30, 30', 40, 50) including at least:

   • one determination stage (31, 41, 51) of a first setpoint (NR1) of said rotation speed (NR) of said main rotor (7),
   • a first regulation stage (32, 42, 52) of the functioning of said at least one main engine (13) according to a current setpoint (NRi) of said rotation speed (NR) and having the same rotation speed (NR) as said first setpoint (NR1),
   • a first identification stage (33, 43, 53), enabling the identification that said rotorcraft (1) is flying at a height (H) greater than or equal to a predetermined threshold height (H1),
   • a second identification stage (34, 44, 54) enabling the identification that said rotorcraft (1) is flying at a speed (V) greater than or equal to a predetermined threshold speed (V1), and

   said regulation process (30, 30', 40, 50) including a second regulation stage (36, 46, 46', 56) suitable to be implemented once the first stage of identification and the second stage of identification are simultaneously verified, said second stage of regulation (36, 46, 46', 56) consisting of regulating a rotation speed for said at least one main engine (13) by gradually reducing a current setpoint (NRi) by an increment i as a percentage of the current setpoint (NRi) per second, until said first setpoint (NR1) reaches a second setpoint (NR2, NR2') lower than said first setpoint (NR1), said second stage of regulation (36, 46, 46', 56) being implemented during a flying phase and depending on the flying height (H) of said rotorcraft (1) as long as an acceleration vector standard of said rotorcraft (1) is less than 1 m/s.

2. Process according to Claim 1, wherein the increment i is comprised between -0.2% and - 0.6% of the current setpoint (NRi) per second.

3. Process according to either Claim 1 or 2, said regulation process (40) comprises a calculation stage (47) of a current value (Czmi) of a coefficient of a mean vertical load-bearing capacity (Czm) of said main rotor (7) and a comparison stage (48) of said current value (Czmi) of the coefficient of a mean vertical load-bearing capacity (Czm) relating to a threshold value (Czm1), said second setpoint (NR2, NR2') depending on a result from said comparison stage (48).

4. Process according to Claim 3, wherein during said second regulation stage (46), if said current value (Czmi) remains lower than said threshold value (Czm1), said second setpoint (NR2) is comprised between 60% and 85% of said nominal value (NRnom).

5. Process according to any one of Claims 3 to 4, wherein during said second regulation stage(46') if said current value (Czmi) reaches said threshold value (Czm1), said second setpoint (NR2') corresponds to said current setpoint (NRi) of said rotation speed (NR).

6. Process according to any one of Claims 3 to 5, said second setpoint (NR2') is comprised between 70% and 100% of said nominal value (NRnom).

7. Process according to any one of Claims 3 to 6, the threshold value (Czm1) is comprised between 0.4 and 0.8.

8. Process according to any one of Claims 1 to 7, said second regulation stage (36) is implemented manually by a pilot of said rotorcraft (1).

9. Process according to any one of Claims 1 to 7, said second regulation stage (46, 46') is implemented automatically.

10. Process according to any one of Claims 1 to 9, wherein said regulation process (40) includes a limitation stage (49) of a reduced value (Vh1) of a maximum admissible speed (Vh) corresponding to the forward progression speed of said rotorcraft (1) when each main engine (13) is piloted at its maximum level of continuous power.

11. Process according to any one of Claims 1 to 10, wherein said regulation process (50) includes a third regulation stage (58) following said second regulation stage (56) to regulate the functioning of said at least one secondary engine (14) according to said first setpoint (NR1) of said rotation speed (NR).

12. Process according to any one of Claims 1 to 11, wherein said regulation process (50) includes a monitoring stage (57) to measure the control setpoints generated by at least one control element (21, 22) of said rotorcraft (1), said monitoring stage (57) enabling a need for power to carry out a manoeuvre of said rotorcraft (1) to be anticipated.

13. Process according to Claim 12, wherein following said third regulations stage (58), said regulation process (50) includes a fourth regulation stage (59) consisting of regulating a rotation speed of said at least one main engine (13) increasing said current setpoint (NRi) until said second setpoint (NR2, NR2') reaches said first setpoint (NR1).

14. Rotorcraft (1) including:

   • an engine installation (2) including two engine groups (3 and 4) and a main power gearbox (5), the two engine groups (3 and 4) being suitable to mechanically drag said main power gearbox (5) to rotate a main output shaft (6) of said main power gearbox (5), said main output shaft (6) supporting the rotation of a main rotor (7) of said rotorcraft (1), said main rotor (7) turning at a rotation speed (NR), said engine installation (2) Including a first calculator (8) determining a first setpoint (NR1) of said rotation speed (NR) of said main rotor (7), said first setpoint (NR1) being comprised between 90% and 110% of a nominal value (NRnom), said two engine groups (3 and 4) consisting on the one hand of a first engine group (3) including at least one main engine (13) and a first regulation device (23), said first regulation device (23) regulating the functioning of said at least one main engine (13) according to a current setpoint (NRi) of said rotation speed (NR) and being equal to said first setpoint (NR1) of said rotation speed (NR) of said main rotor (7), and on the other hand a second engine group (4) including at least one secondary engine (14) and a second regulation device (24), said second regulation device (24) regulating the functioning of said at least one secondary engine (14),
   • a first means of identification (11) enabling the identification that said rotorcraft (1) is flying at a height (H) greater than or equal to a predetermined threshold height (H1), and
   • a second means of identification (12) enabling the identification that said rotorcraft (1) is flying at a speed (V) greater than or equal to a predetermined threshold speed (V1),

   wherein if said first means of identification (11) identifies that said rotorcraft (1) is flying at a height (H) greater than or equal to said predetermined threshold height (H1) and simultaneously said second means of identification (12) identifies that said rotorcraft (1) is flying at a speed (V) greater than or equal to said predetermined threshold speed (V1), said first regulation device (23) is configured to regulate a rotation speed of said at least one main engine (13), gradually reducing the current setpoint (NR1) by an increment i as a percentage of the current setpoint (NR1) per second, until said first setpoint (NR1) reaches a second setpoint (NR2, NR2') lower than said first setpoint (NR1), said current setpoint (NRi) being reduced during a flying phase depending on the flying height (H) of said rotorcraft (1) as long as an acceleration vector standard of said rotorcraft (1) is less than 1 m/s.

15. Rotorcraft according to Claim 14, said rotorcraft (1) includes :

    • a second calculator (18) to calculate a current value (Czmi) of a coefficient of average load-bearing capacity (Czm) of said main rotor (7),
    • an analysis unit (19) to compare said current value (Czmi) for the coefficient of average vertical load-bearing capacity (Czm) relative to a threshold value (Czm1), said second setpoint (NR2,NR2') depending on the result of said comparison carried out by said analysis unit (19).

16. Rotorcraft according to Claim 15 wherein if said current value (Czmi) remains below said threshold value (Czm1), the first regulation device (23) reduces said current setpoint (NRi) until it reaches said second setpoint (NR2), said second setpoint (NR2) being comprised between 60% and 85% of said nominal value (NRnom).

17. Rotorcraft according to any one of Claims 15 to 16, wherein if said current value (Czmi) reaches said threshold value (Czm1), the first regulation device (23) regulates said rotation speed of said at least one main engine (13) to said second setpoint (NR2') corresponding to the current setpoint (NRi) of said rotation speed (NR) by means of which said current value (Czmi) is equal to the threshold value (Czm1).

18. Rotorcraft according to any one of Claims 14 to 17, said second regulation device (24) regulates the functioning of said at least one secondary engine (14) according to said first setpoint (NR1) for said rotation speed (NR).

19. Rotorcraft according to any one of Claims 14 to 17, said rotorcraft (1) includes means of monitoring (20) to measure the control setpoints generated by at least one control element (21, 22) of said rotorcraft (1), said means of monitoring (20) enabling a need for power to carry out a manoeuvre of said rotorcraft (1) to be anticipated.

20. Rotorcraft according to Claim 19, wherein if necessary power to carry out a manoeuvre of said rotorcraft (1), said second regulation device (24) regulates the functioning of said at least one secondary engine (14) according to said first setpoint (NR1) of said rotation speed (NR).

Fig.1

Fig.2

Fig.3

Fig.4

Fig.5

Fig.6

30'

33

34

H ≥ H1

V ≥ V1

31

32

35

36

Fig.7

**EP 3 733 508 B1**

**Documents brevets cités dans la description**

- WO 2008048245 A
- US 2017088281 A
- US 2014229037 A
- US 6198991 B
- WO 2010143051 A
- EP 3444187 A